# EUROPEAN PATENT SPECIFICATION

(11) **EP 3 362 918 B1**
(45) Date of publication and mention of the grant of the patent: **02.12.2026**
(21) Application number: 16856233.8
(22) Date of filing: 14.10.2016
(51) Int. Cl.: G06F 30/00, G06F 111/02, G06N 20/00, G06F 17/11

(54) **SYSTEMS AND METHODS OF DISTRIBUTED OPTIMIZATION**
SYSTEME UND VERFAHREN FÜR VERTEILTE OPTIMIERUNG
SYSTÈMES ET PROCÉDÉS D'OPTIMISATION DISTRIBUÉE

(30) Priority: 16.10.2015 US 201562242771 P; 17.02.2016 US 201615045707
(43) Date of publication of application: 22.08.2018
(73) Proprietor: Google LLC, Mountain View, CA 94043 (US)
(72) Inventor: MCMAHAN, Hugh Brendan, Mountain View, California 94043 (US); KONECNY, Jakub, Mountain View, California 94043 (US); MOORE, Eider Brantly, Mountain View, California 94043 (US); RAMAGE, Daniel, Mountain View, California 94043 (US); AGUERA-ARCAS, Blaise H., Mountain View, California 94043 (US)
(74) Representative: Marks & Clerk GST
(86) International application number: PCT/US2016/056954
(87) International publication number: WO 2017/066509

(56) References cited:
- US-A1- 2012 016 816
- US-A1- 2012 310 870
- US-A1- 2014 214 735
- US-A1- 2015 242 760
- US-B1- 6 879 944
- DHRUV MAHAJAN ET AL: "An efficient distributed learning algorithm based on effective local functional approximations", JOURNAL OF MACHINE LEARNING RESEARCH, 16 March 2015 (2015-03-16), pages 1 - 32, XP055524146, Retrieved from the Internet <URL:https://arxiv.org/pdf/1310.8418.pdf> [retrieved on 20181115]
- DHRUV MAHAJAN ET AL: "A Functional Approximation Based Distributed Learning Algorithm", 31 October 2013 (2013-10-31), XP055524165, Retrieved from the Internet <URL:https://arxiv.org/pdf/1310.8418v1.pdf> [retrieved on 20181115]
- JAKUB KONECN ET AL: "Federated Optimization: Distributed Optimization Beyond the Datacenter", 11 November 2015 (2015-11-11), XP055467298, Retrieved from the Internet <URL:https://arxiv.org/pdf/1511.03575.pdf> [retrieved on 20181115]
- JAKUB KONECN ET AL: "Federated Optimization: Distributed Machine Learning for On-Device Intelligence", 8 October 2016 (2016-10-08) - 15 November 2018 (2018-11-15), XP055524168, Retrieved from the Internet <URL:https://www.maths.ed.ac.uk/~prichtar/papers/federated_optimization.pdf> [retrieved on 20181115]

## Description

### FIELD

The present disclosure relates generally to distributed optimization algorithms, and more particularly to performing optimization algorithms using data distributed unevenly among a large number of computational nodes.

### BACKGROUND

In recent years, machine learning has been increasingly used to solve a number of problems. The amount of data collected for use in solving such problems has also increased in recent years. As the amount of such data increases, it can become difficult to store an entire dataset at a single location. In this manner, no single computing device may have direct access to the entire dataset needed to solve a problem. Conventional training methods for solving machine learning problems in such environments can include collecting a plurality of training data examples at a centralized location (e.g. a server device) wherein the data examples can be shuffled and redistributed evenly among the computing devices.

Dhruv Mahajan et al., in "An efficient distributed learning algorithm based on effective local functional approximations", Journal of Machine Learning Research 16 (2015) 1-32, propose an approach to the distributed training of linear classifiers (involving smooth losses and L2 regularization) that is designed to reduce the total communication costs. At each iteration, the nodes minimize locally formed approximate objective functions; then the resulting minimizers are combined to form a descent direction to move. Dhruv Mahajan et al., in "A Functional Approximation Based Distributed Learning Algorithm", https://arxiv.ord/pdf/1310.8418v1.pdf, propose an approach to the distributed training of linear classifiers. At each iteration, the nodes minimize approximate objective functions and combine the resulting minimizers to form a descent direction to move. The method is shown to have O(log(1 /c)) time convergence. The method can be viewed as an iterative parameter mixing method. A special instantiation yields a parallel stochastic gradient descent method with strong convergence.

### SUMMARY

The present invention relates to a method of updating a global model based on unevenly distributed data as claimed in claim 1, as well as an alternative method of updating a machine learning model based on unevenly distributed data as claimed in claim 11, with a corresponding system according to claim 14, and corresponding one or more computer-readable storage media according to claim 15. Preferred embodiments are defined in the dependent claims.

Aspects and advantages of embodiments of the present disclosure will be set forth in part in the following description, or may be learned from the description, or may be learned through practice of the embodiments.

One example aspect of the present disclosure is directed to a computer-implemented method of updating a global model based on unevenly distributed data. The method includes: providing, by the or more computing devices, a current global model to a plurality of user devices; and receiving, by the one or more computing devices, local updates from the plurality of user devices. Each local update is determined by a respective user device based at least in part on one or more data examples stored on the respective user device. The one or more data examples stored on the plurality of user devices are distributed on an uneven basis, such that no user device includes a representative sample of an overall distribution of data examples. The method further includes aggregating, by the one or more computing devices, the received local updates to determine a global model. This aggregating itself comprises aggregating the received local updates based at least in part on the number of data examples stored on each user device, and scaling the received local updates on a per-coordinate basis Each local update is determined based at least in part on one or more stochastic iterations, each stochastic iteration having a stepsize that is inversely proportional to a number of data examples stored on the respective user device.

Other example aspects of the present disclosure are directed to systems, apparatus, tangible, non-transitory computer-readable media, user interfaces, memory devices, and electronic devices for solving optimization problems in distributed data environments.

These and other features, aspects and advantages of various embodiments will become better understood with reference to the following description and appended claims. The accompanying drawings, which are incorporated in and constitute a part of this specification, illustrate embodiments of the present disclosure and, together with the description, serve to explain the related principles.

### BRIEF DESCRIPTION OF THE DRAWINGS

Detailed discussion of embodiments directed to one of ordinary skill in the art are set forth in the specification, which makes reference to the appended figures, in which:
FIG. 1 depicts an example computing system for implementing optimization techniques over a plurality of nodes according to example embodiments of the present disclosure;
FIG. 2 depicts a flow diagram of an example method of determining a global model according to example aspects of the present disclosure; and
FIG. 3 depicts an example system according to example embodiments of the present disclosure.

### DETAILED DESCRIPTION

Reference now will be made in detail to embodiments, one or more examples of which are illustrated in the drawings. Each example is provided by way of explanation of the embodiments, not limitation of the present disclosure. In fact, it will be apparent to those skilled in the art that various modifications and variations can be made to the embodiments without departing from the scope of the present disclosure. For instance, features illustrated or described as part of one embodiment can be used with another embodiment to yield a still further embodiment. Thus, it is intended that aspects of the present disclosure cover such modifications and variations.

Example aspects of the present disclosure are directed to solving optimization problems defined by an unevenly distributed dataset. For instance, data points used in solving an optimization problem may be stored across a plurality of devices. In this manner, the data on each device may be differently distributed, and may not be a representative sample of the overall distribution of data. For instance, each device may store different amounts of data, and/or different types of data. For instance, some data features may occur on only a small subset of devices.

According to a particular implementation, a central computing device, such as a server or data center can provide data indicative of a current global model to the plurality of computing devices. The plurality of computing devices can determine local updates to the model using data stored on the respective computing devices. For instance, in some implementations, at least one of the computing devices can be a user device, such as a wearable computing device or other user device. The data examples may be generated, for instance, through interaction of a user with the user device. In this manner, the local update can correspond to a model using data generated through use of the user device by the user. For instance, the data examples may include, without limitation, image files, video files, inputted text, or data indicative of other interactions by the user with the user device. The model may be implemented in solving one or more problems, such as predictive typing, predictive image sharing, image classification, voice recognition, next-word-prediction, and/ or various other suitable problems relating to use of the user device.

Each computing device can then provide the local update(s) to the central computing device. For instance, the local update can be a gradient vector. In some implementations, the local update may be determined using one or more gradient descent techniques. For instance, the local update may be determined using batch gradient descent techniques, stochastic gradient descent techniques, or other gradient descent techniques. The local update does not include the training data used to determine the local update. In this manner, the size of the local update can be independent of the training data used to determine the local update, thereby reducing bandwidth requirements and maintaining user privacy. In particular, a global model can be updated based at least in part on the received local updates. By only providing the local update (and not the training data) to the server, the global model update can be determined using reduced bandwidth requirements, and without compromising the security of potentially privacy sensitive data stored on the user devices. In some implementations, the global model update can be a global model parameter vector. In particular, the global model update can be determined by aggregating each local update received by the server. In some implementations, the aggregation can include determining a weighted average of the received local updates.

More particularly, in some embodiments, a set of input-output data can be used to describe a global objective via a loss function. Such functions can be, for instance, a convex or non-convex function, such as a linear regression function, logistic regression function, a support vector machine, neural network function and/or various other suitable functions. A local objective (*Fₖ*) can also be defined using data stored on a computing device. For instance, the global objective can be defined as: $f \left(w\right) = {\sum }_{k = 1}^{K} \frac{{n}_{k}}{n} {F}_{k} \left(w\right) = {\sum }_{k = 1}^{K} \frac{{n}_{k}}{n} ⋅ \frac{1}{{n}_{k}} {\sum }_{i ∈ {P}_{k}} {f}_{i} \left(w\right)$
wherein K describes the number of computing devices, n describes a total number of data examples, *nₖ* describes the number of data examples stored on computing device *k,* and *Pₖ* describes a partition of data example indices {1,...,*n*} stored on the computing device *k.* In this manner, the local objective can specify an optimization problem to be solved by device *k*. According to particular implementations of the present disclosure, the global objective can be solved by aggregating a plurality of local updates provided by a plurality of remote computing devices. Each remote computing device can, for instance, be a user device, such as a laptop computing device, desktop computing device, smartphone, tablet, wearable computing device, or other computing device. The local updates can be determined based at least in part on the respective local objectives.

In particular, a gradient of the global objective can be determined. For instance, each computing device can be configured to determine the gradient of the local objective using the data examples stored on the computing device. In some implementations, the global gradient may be equal to a weighted sum of the local gradients. In implementations wherein the global gradient and the local gradients are not equal, each remote computing device can be configured to provide the determined gradient to the central computing device (e.g. server device, data center, etc.). The central device can then be configured to determine a gradient of the global objective based at least in part on the local objective gradients, and then to provide the gradient to the remote computing devices. For instance, the gradient can be defined as: $∇ f \left({w}^{˜}\right) = \frac{1}{n} {\sum }_{i = 1}^{n} ∇ {f}_{i} \left({w}^{˜}\right)$

Each remote computing device can then determine a local update based at least in part on the global gradient. For instance, the local update can be determined using one or more gradient descent techniques (e.g. stochastic gradient descent). In this manner, each remote computing device can perform one or more stochastic updates or iterations to determine the local update. More particularly, each remote computing device can initialize one or more parameters associated with the local objective. Each remote computing device can then, for instance, uniformly, randomly sample *Pk* for one or more stochastic iterations. In this manner, the local update can be determined based at least in part on the sampled data. In particular, the local update can be defined as : 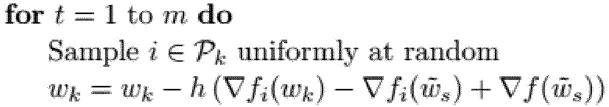 wherein *m* is a number of stochastic steps per iteration, and *h* is the stepsize.

The local updates can then be provided to the central computing device. In particular, the local updates can be gradient vectors. The central computing device can then aggregate the local updates to determine a global update to the model. For instance, the aggregation can be an averaging aggregation defined as: $\overline{w} = \overline{w} + \frac{1}{K} {\sum }_{k = 1}^{K} \left({w}_{k}-\overline{w}\right)$ This can be repeated for one or more iterations, for instance, until the loss function reaches a threshold (e.g. converges). The threshold can be determined based at least in part on a desired accuracy of the global model. As another example, the threshold can be determined based at least in part on the amount of time required for communication between the central computing device and the remote computing devices.

In example embodiments, the local objective can further be determined based at least in part on the distribution of data among the remote computing devices. In particular, a local stepsize (*hₖ)* associated with the stochastic gradient descent for each remote computing device is inversely proportional to the number of data examples stored on the remote computing device. Further, the local objective can be scaled using a diagonal matrix (*Sₖ).* In this manner, the local objective can be defined as:

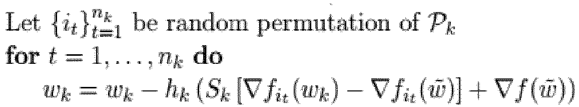

In such embodiments, the aggregation of local updates by the central computing device can be proportional to the number of data examples. The aggregation can further include a per-coordinate scaling of aggregated updates. In this manner, the global model can be an additive aggregation determined as follows: $\overline{w} = \overline{w} + A {\sum }_{k = 1}^{K} \frac{{n}_{k}}{n} \left({w}_{k}-\overline{w}\right)$

Such embodiments can be determined under the assumption that, as some point in time, each remote computing device has the same local iterate. In this manner, each remote computing device can begin from the same point. A linear term: $∇ {F}_{k} \left({{w}^{˜}}_{s}\right) - ∇ f \left({{w}^{˜}}_{s}\right)$ can be added to the local objective to force all nodes to initially move in the same direction.

As an example, the update direction of remote computing device k can be denoted as: ${G}_{k} = ∇ {f}_{i} \left(w\right) - ∇ {f}_{i} \left({w}^{˜}\right) + ∇ f \left({w}^{˜}\right)$ wherein *i* is sampled uniformly at random from *Pk.* If there is only one remote computing device then: $E \left[{G}_{1}\right] = ∇ f \left(w\right) .$ If there are more than one remote computing device, the values of *Gk* are biased estimates of the gradient of *f*(*w*). In this manner, $E \left[{\sum }_{k = 1}^{K} {α}_{k} {G}_{k}\right] = ∇ f \left(w\right)$ can be achieved for some choice of α*ₖ.* This can be motivated by a desire of stochastic firstorder methods to perform a gradient step on expectation. In this manner, we have: $E \left[{\sum }_{k = 1}^{K} {α}_{k} {G}_{k}\right] = {\sum }_{k = 1}^{K} {α}_{k} \frac{1}{{n}_{k}} {\sum }_{i ∈ {P}_{k}} \left[∇{f}_{i}\left(w\right)-∇{f}_{i}\left({w}^{˜}\right)+∇f\left({w}^{˜}\right)\right]$ By setting α*ₖ* to *nk*/*n,* we get: $E \left[{\sum }_{k = 1}^{K} {α}_{k} {G}_{k}\right] = \frac{1}{n} {\sum }_{k = 1}^{K} {\sum }_{i ∈ {P}_{k}} \left[∇{f}_{i}\left(w\right)-∇{f}_{i}\left({w}^{˜}\right)+∇f\left({w}^{˜}\right)\right] = ∇ f \left(w\right)$ This motivates the aggregation of updates from nodes proportional to *nₖ.* The local stepsize *hₖ* can be included, for instance, when the number of data examples on each remote computing device is not equal. In such embodiments, it may not be beneficial to perform the same number of stochastic iterations on each remote device. In this manner, setting the stepsize as inversely proportional to the number of data examples on the remote device can allow each remote device to travel roughly the same distance. In this manner, the local and global model updates can be implemented as follows:

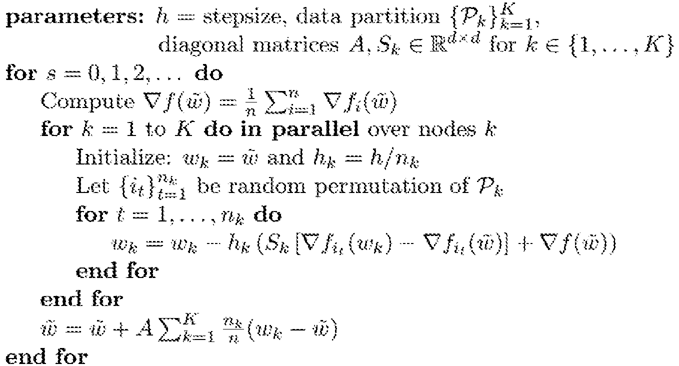

In further embodiments, the local objective can be defined as follows: ${w}_{k} = {arg min}_{w ∈ {ℝ}^{d}} \left\{{n}_{k}{F}_{k}\left(w\right)+{\left(n∇f\left({{w}^{˜}}_{s}\right)-{n}_{k}∇{F}_{k}\left({{w}^{˜}}_{s}\right)\right)}^{T}w+\frac{β}{2}{\left‖{U}^{\frac{1}{2}}\left(w-{{w}^{˜}}_{s}\right)\right‖}^{2}\right\} .$ In such embodiments, a diagonal matrix $U ∈ {ℝ}^{d \times d}$ is defined having diagonal entries: ${u}_{j} = β \frac{{n}^{j}}{{n}_{k}^{j}}$ A regularizer term is defined as: $\frac{1}{2} {\left‖{U}^{\frac{1}{2}}\left(w-{{w}^{˜}}_{s}\right)\right‖}^{2} .$ The *uⱼ* can correspond to a curvature in dimension *i.* For instance, *uⱼ =* β can be very small when each *ith* data example is on the current remote computing device. In this manner, *wⱼ* can be determined as desired by the remote computing device. In such embodiments, when ${n}_{j}^{k} = 0$, the regularization is infinitely strong, and the coefficients of features for which no data is present may not be changed.

In some implementations, stochastic gradient descent techniques can be naively applied to the optimization problem, wherein one or more "minibatch" gradient calculations (e.g. using one or more randomly selected use devices) are performed per round of communication. For instance, the minibatch can include at least a subset of the training data stored locally on the user devices. In such implementations, one or more user devices can be configured to determine the average gradient associated with the local training data respectively stored on the user devices for a current version of a model. The user devices can be configured to provide the determined gradients to the server, as part of the local updates. The server can then aggregate the gradients to determine a global model update. As another example, in some implementations, one or more user devices can perform one or more "steps" of gradient descent on the current model using at least a subset of the local training data respectively stored on the user devices, and provide data indicative of the one or more gradient descent steps to the server. The server can then aggregate the data, for instance, by determining a weighted average. For instance, the user devices may determine an updated version of the model (e.g. using one or more stochastic gradient descent techniques) using local data. The server can then determine a weighted average of the resulting models to determine a global update to the model.

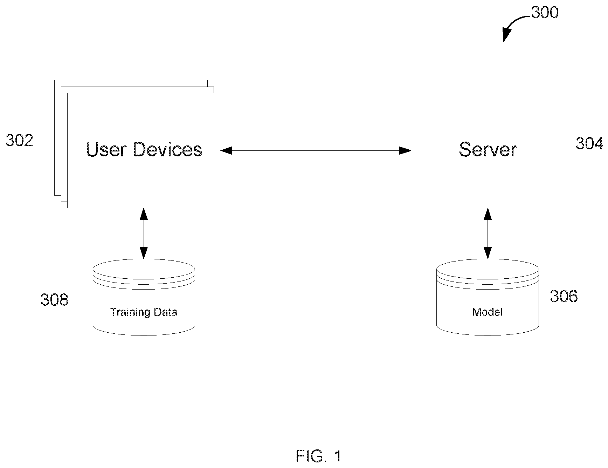

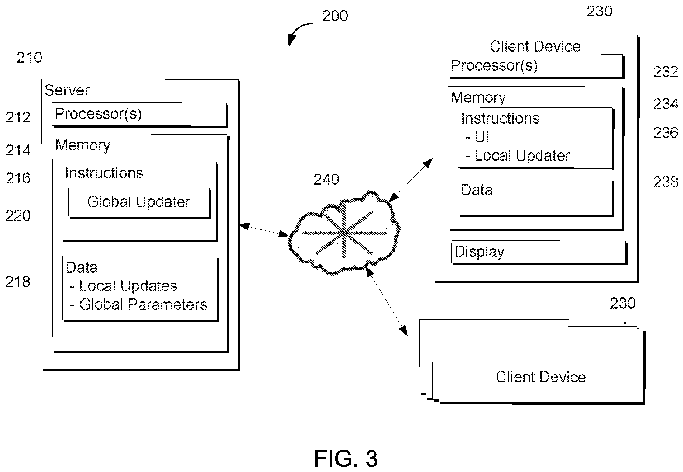

With reference now to the figures, example embodiments of the present disclosure will be discussed in further detail. For instance, FIG. 1 depicts an example system 300 for training one or more global machine learning models 306 using training data 308 stored locally on a plurality of user devices 302. System 300 can further include a server device 304. Server 304 can be configured to access machine learning model 306, and to provide model 306 to a plurality of user devices 302. Model 306 can be, for instance, a linear regression model, logistic regression model, a support vector machine model, a neural network (e.g. convolutional neural network, recurrent neural network, etc.), or other suitable model. In some implementations, sever 304 can be configured to communicate with user devices 302 over one or more networks, such as network 240 of FIG. 3.

User devices 302 can each be configured to determine one or more local updates associated with model 306 based at least in part on training data 308. For instance, training data 308 can be data stored locally on the user devices 306. In this manner, training data 308 can include audio files, image files, video files, a typing history, location history, and/or various other suitable data. In some implementations, the training data can be any data derived through a user interaction with a user device 302.

In some implementations, the local updates can be a gradient vector associated with the model. For instance, user devices 302 can determine a gradient (e.g. an average gradient) associated with the model based at least in part on training data 308 respectively stored on user devices 302. In some implementations, the local update can include an updated version of model 306 determined by taking one or more stochastic gradient descent steps. It will be appreciated that the local updates can include any suitable data indicative of one or more local training techniques respectively performed by user devices 302 based at least in part on training data 308. In some implementations, the local updates can include one or more training passes, or epochs. In this manner the minibatch of training data can be applied one or more times to determine the local update.

User devices 302 can then be configured to provide the local updates to server 304. As indicated above, training data 308 may be privacy sensitive. In this manner, the local updates can be performed and provided to server 304 without compromising the privacy of training data 308. For instance, in such implementations, training data 308 is not provided to server 304. The local update does not include training data 308. In implementations, wherein a locally updated model is provided to server 304, privacy sensitive data may be able to be derived or inferred from the model parameters. In such implementations, one or more encryption, random noise techniques, and/or other security techniques can be added to the training process to obscure any inferable information.

As indicated above, server 304 can receive each local update from user device 302, and can aggregate the local updates to determine a global update to the model. In some implementations, server 304 can determine a weighted average of the local updates and determine the global update based at least in part on the average.

In some implementations, scaling or other techniques can be applied to the local updates to determine the global update. For instance, a local stepsize can be applied for each user device 302, the aggregation can be performed proportionally to various data partition sizes of user devices 302, and/or one or more scaling factors can be applied to the local and/or aggregated updates. It will be appreciated that various other techniques can be applied without deviating from the scope of the present disclosure.

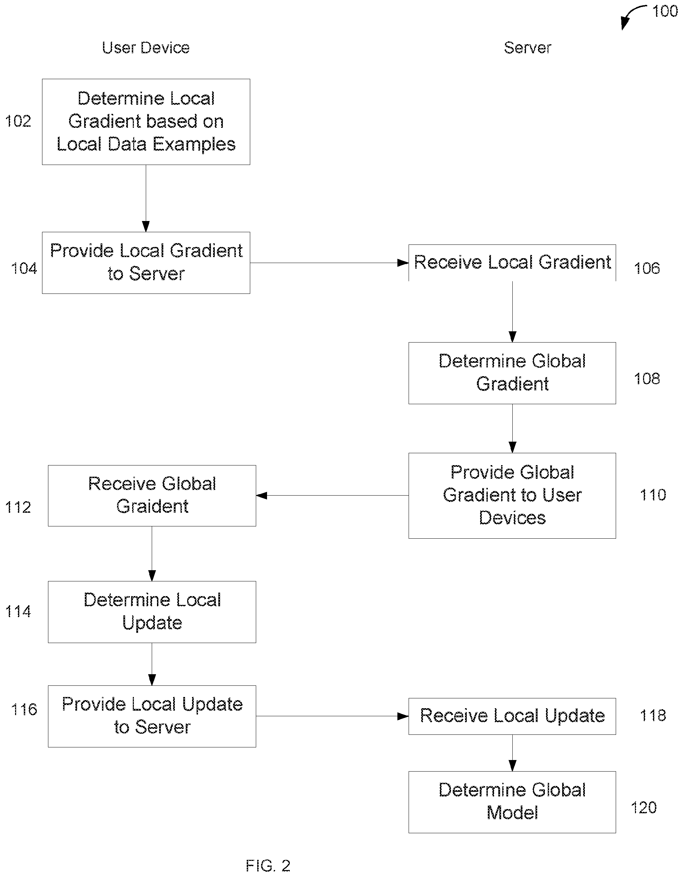

FIG. 2 depicts a flow diagram of an example method (100) of determining a global model according to example embodiments of the present disclosure. Method (100) can be implemented by one or more computing devices, such as one or more of the computing devices depicted in FIG. 3. In addition, FIG. 2 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure.

At (102), method (100) can include determining, by a user device, a local gradient based on one or more local data examples. In particular, the local gradient can be determined for a loss function using the one or more data examples. In some implementations, the user device can be a wearable computing device. The data examples may be generated, for instance, through interaction of a user with the user device. At (104), method (100) can include providing, by the user device, the local gradient to a server, and at (106), method (100) can include receiving, by the server, the local gradient.

At (108), method (100) can include determining, by the server, a global gradient based at least in part on the received local gradient. For instance, the can be determined based at least in part on a plurality of local gradients provided by a plurality of user devices, each having a plurality of unevenly distributed data examples. In particular, the data example may be distributed among the user devices such that no user device includes a representative sample of the overall distribution of data. In addition, the number of user devices may exceed the number of data examples on any one user device.

At (110), method (100) can include providing the global gradient to each user device, and at (112), method (100) can include receiving the global gradient.

At (114), method (100) can include determining, by the user device, a local update. In a particular implementation, the local update can be determined based at least in part on the global update. In other implementations, the global gradient may not be required to determine the local update. For instance, in such implementations, each local gradient may be identical. In such embodiments, the global gradient may not be determined by the server, and method (100) can bypass (104)-(112).

The local update can be determined based at least in part using one or more stochastic updates or iterations. For instance, the user device may randomly sample a partition of data examples stored on the user device to determine the local update. In particular, the local update may be determined using stochastic gradient descent techniques to determine a direction in which to adjust one or more parameters of the loss function.

In some embodiments, a stepsize associated with the local update determination can be determined based at least in part on a number of data examples stored on the user device. In further embodiments, the stochastic gradient can be scaled using a diagonal matrix, or other scaling technique. In still further embodiments, the local update can be determined using a linear term that forces each user device to update the parameters of the loss function in the same direction.

At (116), method (100) can include providing, by the user device, the local update to the server, and at (118), method (100) can include receiving, by the server, the local update. In particular, the server can receive a plurality of local updates from a plurality of user devices.

At (120), method (100) can include determining a global model. In particular, the global model can be determined based at least in part on the received local update(s). For instance, the received local updates can be aggregated to determine the global model. The aggregation can be an additive aggregation and/or an averaging aggregation. In particular implementations, the aggregation of the local updates can be proportional to the partition sizes of the data examples on the user devices. In further embodiments the aggregation of the local updates can be scaled on a per-coordinate basis. Any number of iterations of local and global updates can be performed.

FIG. 3 depicts an example computing system 200 that can be used to implement the methods and systems according to example aspects of the present disclosure. The system 200 can be implemented using a client-server architecture that includes a server 210 that communicates with one or more client devices 230 over a network 240.

The system 200 includes a server 210, such as a web server. The server 210 can be implemented using any suitable computing device(s), and can correspond to server 304 of FIG. 1. The server 210 can have one or more processors 212 and one or more memory devices 214. The server 210 can also include a network interface used to communicate with one or more client devices 230 over the network 240. The network interface can include any suitable components for interfacing with one more networks, including for example, transmitters, receivers, ports, controllers, antennas, or other suitable components.

The one or more processors 212 can include any suitable processing device, such as a microprocessor, microcontroller, integrated circuit, logic device, or other suitable processing device. The one or more memory devices 214 can include one or more computer-readable media, including, but not limited to, non-transitory computer-readable media, RAM, ROM, hard drives, flash drives, or other memory devices. The one or more memory devices 214 can store information accessible by the one or more processors 212, including computer-readable instructions 216 that can be executed by the one or more processors 212. The instructions 216 can be any set of instructions that when executed by the one or more processors 212, cause the one or more processors 212 to perform operations. For instance, the instructions 216 can be executed by the one or more processors 212 to implement global updater 220. The global updater 220 can be configured to receive one or more local updates and to determine a global model based at least in part on the local updates.

As shown in FIG. 3, the one or more memory devices 214 can also store data 218 that can be retrieved, manipulated, created, or stored by the one or more processors 212. The data 218 can include, for instance, local updates, global parameters, and other data. The data 218 can be stored in one or more databases. The one or more databases can be connected to the server 210 by a high bandwidth LAN or WAN, or can also be connected to server 210 through network 240. The one or more databases can be split up so that they are located in multiple locales.

The server 210 can exchange data with one or more client devices 230 over the network 240. Any number of client devices 230 can be connected to the server 210 over the network 240. Each of the client devices 230 can be any suitable type of computing device, such as a general purpose computer, special purpose computer, laptop, desktop, mobile device, navigation system, smartphone, tablet, wearable computing device, a display with one or more processors, or other suitable computing device. In some implementations, the client devices 230 can correspond to user devices 302 of FIG. 1.

Similar to the server 210, a client device 230 can include one or more processor(s) 232 and a memory 234. The one or more processor(s) 232 can include one or more central processing units (CPUs), graphics processing units (GPUs) dedicated to efficiently rendering images or performing other specialized calculations, and/or other processing devices. The memory 234 can include one or more computer-readable media and can store information accessible by the one or more processors 232, including instructions 236 that can be executed by the one or more processors 232 and data 238. The data 238 can include one or more data examples to be used in solving one or more optimization problems. The data examples of each client device 230 can be distributed unevenly among the client devices, such that no client device 230 includes a representative sample of the overall distribution of the data examples. The memory 234 can store instructions 236 for implementing a local updater configured to determine one or more local updates according to example aspects of the present disclosure.

The client device 230 of FIG. 3 can include various input/output devices for providing and receiving information from a user, such as a touch screen, touch pad, data entry keys, speakers, and/or a microphone suitable for voice recognition.

The client device 230 can also include a network interface used to communicate with one or more remote computing devices (e.g. server 210) over the network 240. The network interface can include any suitable components for interfacing with one more networks, including for example, transmitters, receivers, ports, controllers, antennas, or other suitable components.

The network 240 can be any type of communications network, such as a local area network (e.g. intranet), wide area network (e.g. Internet), cellular network, or some combination thereof. The network 240 can also include a direct connection between a client device 230 and the server 210. In general, communication between the server 210 and a client device 230 can be carried via network interface using any type of wired and/or wireless connection, using a variety of communication protocols (e.g. TCP/IP, HTTP, SMTP, FTP), encodings or formats (e.g. HTML, XML), and/or protection schemes (e.g. VPN, secure HTTP, SSL).

The technology discussed herein makes reference to servers, databases, software applications, and other computer-based systems, as well as actions taken and information sent to and from such systems. One of ordinary skill in the art will recognize that the inherent flexibility of computer-based systems allows for a great variety of possible configurations, combinations, and divisions of tasks and functionality between and among components. For instance, server processes discussed herein may be implemented using a single server or multiple servers working in combination. Databases and applications may be implemented on a single system or distributed across multiple systems. Distributed components may operate sequentially or in parallel.

While the present subject matter has been described in detail with respect to specific example embodiments thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A computer-implemented method of updating a global model based on unevenly distributed data, the method comprising:
providing, by one or more computing devices, a current global model to a plurality of user devices;
receiving, by the one or more computing devices, local updates to the current global model from the plurality of user devices, each local update being determined by a respective user device of the plurality of user devices based on one or more data examples stored on the respective user device, wherein the data examples stored on the plurality of user devices are distributed on an uneven basis, such that no user device includes a representative sample of the overall distribution of data examples; and
aggregating, by the one or more computing devices, the received local updates to determine an updated global model, **characterized in that** the aggregating comprises:
aggregating the received local updates based on the number of data examples stored on each user device; and
scaling the received local updates on a per-coordinate basis;
wherein each local update is determined based on one or more stochastic iterations, each stochastic iteration having a stepsize that is inversely proportional to the number of data examples stored on the respective user device.

2. The computer-implemented method of claim 1, wherein at least one of the local updates comprise a gradient vector associated with the data stored on the respective user device;
or wherein the size of each local update is independent from the size of the data used to determine the local update;
or wherein the one or more local updates are determined using one or more optimization algorithms.

3. The computer-implemented method of claim 1, wherein the one or more local updates are determined using one or more diagonal scaling matrices.

4. The computer-implemented method of claim 1, wherein the one or more stochastic iterations are determined at least in part by randomly sampling the data examples stored on the respective user device.

5. The computer-implemented method of claim 1, wherein aggregating, by the one or more computing devices, the received local updates to determine a global model comprises determining a weighted average of the received local updates.

6. The computer-implemented method of claim 1, wherein aggregating, by the one or more computing devices, the received local updates to determine a global model comprises aggregating the received local updates for at least one iteration.

7. The computer-implemented method of claim 6, wherein the at least one iteration is determined based at least in part on a threshold.

8. The computer-implemented method of claim 7, wherein the threshold is determined based at least in part on an amount of time required for communication of the one or more local updates.

9. The computer-implemented method of claim 1, wherein the number of data examples stored on each user device is smaller than the total number of user devices.

10. The computer-implemented method of claim 1, further comprising providing a gradient of a loss function to each of the one or more user devices.

11. A computer-implemented method of updating a local machine learning model based on unevenly distributed data, the method comprising:
determining, by a user device of a plurality of user devices, a gradient vector of a loss function associated with a global machine learning model;
determining, by the user device, a local model update to the global machine learning model based on the gradient vector of the loss function and one or more locally stored data examples, wherein the distribution of locally stored data examples across the user devices is not representative of an overall distribution of the data examples used to train the global machine learning model; and
providing, by the user device, the local model update to the central computing device for use in determination of an update to the global machine learning model, the update to the global machine learning model being determined based on aggregation of local model updates received from a plurality of user devices, **characterized in that** the aggregation comprises aggregating the received local updates based on the number of data examples stored on each user device and comprising scaling the received local updates on a per-coordinate basis;
wherein determining, by the user device, the local model update comprises determining the local model update based on one or more stochastic iterations, each stochastic iteration having a stepsize that is inversely proportional to the number of data examples stored on the respective user device.

12. The computer-implemented method of claim 11, wherein the one or more stochastic iterations are determined at least in part by randomly sampling the data examples stored on the respective user device.

13. The computer-implemented method of claim 12, wherein determining, by the one or more computing devices, a local model update comprises determining the local model update based at least in part on one or more diagonal scaling matrices.

14. A computing system, comprising:
one or more processors; and
one or more memory devices, the one or more memory devices storing computer-readable instructions that when executed by the one or more processors cause the one or more processors to perform the method according to any one of claims 1 to 10 or the method according to any one of claims 11 to 13.

15. One or more computer-readable storage media, comprising computer-readable instructions that, when executed by one or more processors, cause the one or more processors to perform the method according to any one of claims 1 to 10 or the method according to any one of claims 11 to 13.

## Patentansprüche

1. Computerimplementiertes Verfahren zum Aktualisieren eines globalen Modells basierend auf ungleichmäßig verteilten Daten, wobei das Verfahren Folgendes umfasst:
Bereitstellen, durch eine oder mehrere Rechenvorrichtungen, eines aktuellen globalen Modells für eine Mehrzahl von Benutzervorrichtungen;
Empfangen, durch die eine oder mehreren Rechenvorrichtungen, von lokalen Aktualisierungen des aktuellen globalen Modells von der Mehrzahl von Benutzervorrichtungen, wobei jede lokale Aktualisierung durch eine jeweilige Benutzervorrichtung der Mehrzahl von Benutzervorrichtungen basierend auf einem oder mehreren an der jeweiligen Benutzervorrichtung gespeicherten Datenbeispielen bestimmt wird, wobei die an der Mehrzahl von Benutzervorrichtungen gespeicherten Datenbeispiele auf einer ungleichmäßigen Basis verteilt sind, so dass keine Benutzervorrichtung eine repräsentative Stichprobe der Gesamtverteilung von Datenbeispielen einschließt; und
Aggregieren, durch die eine oder mehreren Rechenvorrichtungen, der empfangenen lokalen Aktualisierungen, um ein aktualisiertes globales Modell zu bestimmen, **dadurch gekennzeichnet, dass** Aggregieren Folgendes umfasst:
Aggregieren der empfangenen lokalen Aktualisierungen basierend auf der Anzahl von Datenbeispielen, die an jeder Benutzervorrichtung gespeichert sind; und
Skalieren der empfangenen lokalen Aktualisierungen auf einer Pro-Koordinaten-Basis;
wobei jede lokale Aktualisierung basierend auf einer oder mehreren stochastischen Iterationen bestimmt wird, wobei jede stochastische Iteration eine Schrittweite aufweist, die umgekehrt proportional zu der Anzahl von an der jeweiligen Benutzervorrichtung gespeicherten Datenbeispielen ist.

2. Computerimplementiertes Verfahren nach Anspruch 1, wobei mindestens eine der lokalen Aktualisierungen einen Gradientenvektor umfasst, der den an der jeweiligen Benutzervorrichtung gespeicherten Daten zugeordnet ist;
oder wobei die Größe jeder lokalen Aktualisierung unabhängig von der Größe der Daten ist, die verwendet werden, um die lokale Aktualisierung zu bestimmen;
oder wobei die eine oder mehreren lokalen Aktualisierungen unter Verwendung eines oder mehrerer Optimierungsalgorithmen bestimmt werden.

3. Computerimplementiertes Verfahren nach Anspruch 1, wobei die eine oder mehreren lokalen Aktualisierungen unter Verwendung einer oder mehrerer diagonaler Skalierungsmatrizen bestimmt werden.

4. Computerimplementiertes Verfahren nach Anspruch 1, wobei die eine oder mehreren stochastischen Iterationen zumindest teilweise durch zufälliges Abtasten der an der jeweiligen Benutzervorrichtung gespeicherten Datenbeispiele bestimmt werden.

5. Computerimplementiertes Verfahren nach Anspruch 1, wobei Aggregieren, durch die eine oder mehreren Rechenvorrichtungen, der empfangenen lokalen Aktualisierungen, um ein globales Modell zu bestimmen, Bestimmen eines gewichteten Durchschnitts der empfangenen lokalen Aktualisierungen umfasst.

6. Computerimplementiertes Verfahren nach Anspruch 1, wobei Aggregieren, durch die eine oder mehreren Rechenvorrichtungen, der empfangenen lokalen Aktualisierungen, um ein globales Modell zu bestimmen, Aggregieren der empfangenen lokalen Aktualisierungen für mindestens eine Iteration umfasst.

7. Computerimplementiertes Verfahren nach Anspruch 6, wobei die mindestens eine Iteration zumindest teilweise basierend auf einem Schwellenwert bestimmt wird.

8. Computerimplementiertes Verfahren nach Anspruch 7, wobei der Schwellenwert zumindest teilweise basierend auf einer Zeitdauer bestimmt wird, die für die Kommunikation der einen oder mehreren lokalen Aktualisierungen erforderlich ist.

9. Computerimplementiertes Verfahren nach Anspruch 1, wobei die Anzahl von an jeder Benutzervorrichtung gespeicherten Datenbeispielen kleiner als die Gesamtzahl von Benutzervorrichtungen ist.

10. Computerimplementiertes Verfahren nach Anspruch 1, ferner umfassend Bereitstellen eines Gradienten einer Verlustfunktion für jede der einen oder mehreren Benutzervorrichtungen.

11. Computerimplementiertes Verfahren zum Aktualisieren eines lokalen Maschinenlernmodells basierend auf ungleichmäßig verteilten Daten, wobei das Verfahren Folgendes umfasst:
Bestimmen, durch eine Benutzervorrichtung einer Mehrzahl von Benutzervorrichtungen, eines Gradientenvektors einer Verlustfunktion, der einem globalen Maschinenlernmodell zugeordnet ist;
Bestimmen, durch die Benutzervorrichtung, einer lokalen Modellaktualisierung des globalen Maschinenlernmodells basierend auf dem Gradientenvektor der Verlustfunktion und einem oder mehreren lokal gespeicherten Datenbeispielen, wobei die Verteilung von lokal gespeicherten Datenbeispielen über die Benutzervorrichtungen nicht repräsentativ für eine Gesamtverteilung der Datenbeispiele ist, die verwendet werden, um das globale Maschinenlernmodell zu trainieren; und
Bereitstellen, durch die Benutzervorrichtung, der lokalen Modellaktualisierung der zentralen Rechenvorrichtung zur Verwendung bei der Bestimmung einer Aktualisierung des globalen Maschinenlernmodells, wobei die Aktualisierung des globalen Maschinenlernmodells basierend auf der Aggregation von lokalen Modellaktualisierungen bestimmt wird, die von einer Mehrzahl von Benutzervorrichtungen empfangen werden, **dadurch gekennzeichnet, dass** die Aggregation Aggregieren der empfangenen lokalen Aktualisierungen basierend auf der Anzahl von Datenbeispielen umfasst, die an jeder Benutzervorrichtung gespeichert sind, und umfassend Skalieren der empfangenen lokalen Aktualisierungen auf einer Pro-Koordinaten-Basis;
wobei Bestimmen, durch die Benutzervorrichtung, der lokalen Modellaktualisierung Bestimmen der lokalen Modellaktualisierung basierend auf einer oder mehreren stochastischen Iterationen umfasst, wobei jede stochastische Iteration eine Schrittweite aufweist, die umgekehrt proportional zu der Anzahl von an der jeweiligen Benutzervorrichtung gespeicherten Datenbeispielen ist.

12. Computerimplementiertes Verfahren nach Anspruch 11, wobei die eine oder mehreren stochastischen Iterationen zumindest teilweise durch zufälliges Abtasten der an der jeweiligen Benutzervorrichtung gespeicherten Datenbeispiele bestimmt werden.

13. Computerimplementiertes Verfahren nach Anspruch 12, wobei Bestimmen, durch die eine oder mehreren Rechenvorrichtungen, einer lokalen Modellaktualisierung Bestimmen der lokalen Modellaktualisierung zumindest teilweise basierend auf einer oder mehreren diagonalen Skalierungsmatrizen umfasst.

14. Rechensystem, umfassend:
einen oder mehrere Prozessoren; und
eine oder mehrere Speichervorrichtungen, wobei die eine oder mehreren Speichervorrichtungen computerlesbare Anweisungen speichern, die, wenn sie durch den einen oder die mehreren Prozessoren ausgeführt werden, den einen oder die mehreren Prozessoren veranlassen, das Verfahren nach einem der Ansprüche 1 bis 10 oder das Verfahren nach einem der Ansprüche 11 bis 13 durchzuführen.

15. Ein oder mehrere computerlesbare Speichermedien, umfassend computerlesbare Anweisungen, die, wenn sie durch einen oder mehrere Prozessoren ausgeführt werden, den einen oder die mehreren Prozessoren veranlassen, das Verfahren nach einem der Ansprüche 1 bis 10 oder das Verfahren nach einem der Ansprüche 11 bis 13 durchzuführen.

## Revendications

1. Procédé mis en œuvre par ordinateur de mise à jour d'un modèle global sur la base de données inégalement distribuées, le procédé comprenant :
la fourniture, par un ou plusieurs dispositifs informatiques, d'un modèle global actuel à une pluralité de dispositifs utilisateurs ;
la réception, par les un ou plusieurs dispositifs informatiques, de mises à jour locales du modèle global actuel à partir de la pluralité de dispositifs utilisateurs, chaque mise à jour locale étant déterminée par un dispositif utilisateur respectif de la pluralité de dispositifs utilisateurs sur la base d'un ou de plusieurs exemples de données stockés sur le dispositif utilisateur respectif, dans lequel les exemples de données stockés sur la pluralité de dispositifs utilisateurs sont distribués de manière inégale, de sorte qu'aucun dispositif utilisateur ne comporte un échantillon représentatif de la distribution globale d'exemples de données ; et
l'agrégation, par les un ou plusieurs dispositifs informatiques, des mises à jour locales reçues pour déterminer un modèle global mis à jour, **caractérisé en ce que** l'agrégation comprend :
l'agrégation des mises à jour locales reçues sur la base du nombre d'exemples de données stockés sur chaque dispositif utilisateur ; et
la mise à l'échelle des mises à jour locales reçues coordonnée par coordonnée ;
dans lequel chaque mise à jour locale est déterminée sur la base d'une ou de plusieurs itérations stochastiques, chaque itération stochastique ayant une taille de pas qui est inversement proportionnelle au nombre d'exemples de données stockés sur le dispositif utilisateur respectif.

2. Procédé mis en œuvre par ordinateur selon la revendication 1, dans lequel au moins une des mises à jour locales comprend un vecteur de gradient associé aux données stockées sur le dispositif utilisateur respectif ;
ou dans lequel la taille de chaque mise à jour locale est indépendante de la taille des données utilisées pour déterminer la mise à jour locale ;
ou dans lequel les une ou plusieurs mises à jour locales sont déterminées à l'aide d'un ou de plusieurs algorithmes d'optimisation.

3. Procédé mis en œuvre par ordinateur selon la revendication 1, dans lequel les une ou plusieurs mises à jour locales sont déterminées à l'aide d'une ou de plusieurs matrices de mise à l'échelle diagonales.

4. Procédé mis en œuvre par ordinateur selon la revendication 1, dans lequel les une ou plusieurs itérations stochastiques sont déterminées au moins en partie par un échantillonnage aléatoire des exemples de données stockés sur le dispositif utilisateur respectif.

5. Procédé mis en œuvre par ordinateur selon la revendication 1, dans lequel l'agrégation, par les un ou plusieurs dispositifs informatiques, des mises à jour locales reçues pour déterminer un modèle global comprend la détermination d'une moyenne pondérée des mises à jour locales reçues.

6. Procédé mis en œuvre par ordinateur selon la revendication 1, dans lequel l'agrégation, par les un ou plusieurs dispositifs informatiques, des mises à jour locales reçues pour déterminer un modèle global comprend l'agrégation des mises à jour locales reçues pour au moins une itération.

7. Procédé mis en œuvre par ordinateur selon la revendication 6, dans lequel l'au moins une itération est déterminée au moins en partie sur la base d'un seuil.

8. Procédé mis en œuvre par ordinateur selon la revendication 7, dans lequel le seuil est déterminé au moins en partie sur la base d'une quantité de temps nécessaire à la communication des une ou plusieurs mises à jour locales.

9. Procédé mis en œuvre par ordinateur selon la revendication 1, dans lequel le nombre d'exemples de données stockés sur chaque dispositif utilisateur est inférieur au nombre total de dispositifs utilisateurs.

10. Procédé mis en œuvre par ordinateur selon la revendication 1, comprenant en outre la fourniture d'un gradient d'une fonction de perte à chacun des un ou plusieurs dispositifs utilisateurs.

11. Procédé mis en œuvre par ordinateur de mise à jour d'un modèle d'apprentissage automatique local sur la base de données inégalement distribuées, le procédé comprenant :
la détermination, par un dispositif utilisateur d'une pluralité de dispositifs utilisateurs, d'un vecteur de gradient d'une fonction de perte associée à un modèle d'apprentissage automatique global ;
la détermination, par le dispositif utilisateur, d'une mise à jour de modèle locale du modèle d'apprentissage automatique global sur la base du vecteur de gradient de la fonction de perte et d'un ou de plusieurs exemples de données stockés localement, dans lequel la distribution d'exemples de données stockés localement sur les dispositifs utilisateurs n'est pas représentative d'une distribution globale des exemples de données utilisés pour entraîner le modèle d'apprentissage automatique global ; et
la fourniture, par le dispositif utilisateur, de la mise à jour de modèle locale au dispositif informatique central pour une utilisation dans la détermination d'une mise à jour du modèle d'apprentissage automatique global, la mise à jour du modèle d'apprentissage automatique global étant déterminée sur la base de l'agrégation de mises à jour de modèles locales reçues à partir d'une pluralité de dispositifs utilisateurs, **caractérisé en ce que** l'agrégation comprend l'agrégation des mises à jour locales reçues sur la base du nombre d'exemples de données stockés sur chaque dispositif utilisateur et
comprenant la mise à l'échelle des mises à jour locales reçues coordonnée par coordonnée ;
dans lequel la détermination, par le dispositif utilisateur, de la mise à jour de modèle locale comprend la détermination de la mise à jour de modèle locale sur la base d'une ou de plusieurs itérations stochastiques, chaque itération stochastique ayant une taille de pas qui est inversement proportionnelle au nombre d'exemples de données stockés sur le dispositif utilisateur respectif.

12. Procédé mis en œuvre par ordinateur selon la revendication 11, dans lequel les une ou plusieurs itérations stochastiques sont déterminées au moins en partie par un échantillonnage aléatoire des exemples de données stockés sur le dispositif utilisateur respectif.

13. Procédé mis en œuvre par ordinateur selon la revendication 12, dans lequel la détermination, par les un ou plusieurs dispositifs informatiques, d'une mise à jour de modèle locale comprend la détermination de la mise à jour de modèle locale au moins en partie sur la base d'une ou de plusieurs matrices de mise à l'échelle diagonales.

14. Système informatique, comprenant :
un ou plusieurs processeurs ; et
un ou plusieurs dispositifs de mémoire, les un ou plusieurs dispositifs de mémoire stockant des instructions lisibles par ordinateur qui, lorsqu'elles sont exécutées par les un ou plusieurs processeurs, amènent les un ou plusieurs processeurs à réaliser le procédé selon l'une quelconque des revendications 1 à 10 ou le procédé selon l'une quelconque des revendications 11 à 13.

15. Un ou plusieurs supports de stockage lisibles par ordinateur, comprenant des instructions lisibles par ordinateur qui, lorsqu'elles sont exécutées par un ou plusieurs processeurs, amènent les un ou plusieurs processeurs à réaliser le procédé selon l'une quelconque des revendications 1 à 10 ou le procédé selon l'une quelconque des revendications 11 à 13.
